# EUROPEAN PATENT APPLICATION

(11) **EP 4 769 463 A1**
(43) Date of publication of application: **01.07.2026**
(21) Application number: 25166583.2
(22) Date of filing: 27.03.2025
(51) Int. Cl.: H01G 4/30, H01G 4/12, H01G 4/008, H01G 4/08, H01G 4/10, H01G 4/012

(54) **LAMINATED CERAMIC CAPACITOR**

(30) Priority: 30.12.2024 TW 113151537
(71) Applicant: Holy Stone Enterprise Co., Ltd., Taipei City (TW)
(72) Inventor: NAGAI, Atsuo, TAIPEI CITY (TW); SEINO, Keisuke, TAIPEI CITY (TW)
(74) Representative: Casalonga

(57) **Abstract**

Provided is a laminated ceramic capacitor (1), comprising multiple segregated particles (7) having a size of 10 microns or less in an effective capacitance part (40); wherein the segregated particles (7) are mostly in direct contact with the internal electrode layers (3), and the segregated particles (7) have ingredients comprising Si, an alkaline earth metal, a rare earth element or a combination thereof. The segregated particles (7) comprising Si are in a higher concentration than the segregated particles (7) comprising the alkaline earth metal, and the segregated particles (7) comprising the alkaline earth metal are in a higher concentration than the segregated particles (7) comprising the rare earth element. The laminated ceramic capacitor (1) of the present invention can maintain a high capacitance and avoid insulation resistance degradation resulting from a high temperature or a high voltage, thereby demonstrating a good highly accelerated lifetime and good reliability.

## Description

The present invention relates to a laminated ceramic capacitor.

With advancements of electronic devices, laminated ceramic capacitors are required to have higher reliability.

Generally, it is believed that the laminated ceramic capacitors using barium titanate (BaTiO₃) as the main component have an inferior highly accelerated lifetime (abbreviated as HAL) because oxygen vacancies generated during the sintering process accumulate near the internal electrode layers in the highly accelerated life test (HALT). When oxygen vacancies exceed a critical concentration, a short circuit occurs and causes insulation resistance degradation. In comparison, segregation phase is generated in the form of paraelectric particles, and does not result in the oxygen vacancy issue. Further, the laminated ceramic capacitors with phase segregation can have a low dielectric constant to maintain a high insulation resistance of the laminated ceramic capacitors in HALT.

For example, JP2020021819A discloses that in order to solve the uneven distribution of the electric field caused by segregation phase scattered in dielectric layers, the phase segregation pattern of the rare earth elements is controlled to near and in contact with the internal electrode layers, thereby improving the HAL and the relative dielectric constant of the laminated ceramic capacitors.

However, if the laminated ceramic capacitor of JP2020021819A comprises insufficient rare earth oxide, it is difficult to generate said phase segregation pattern, and the issue of the uneven distribution of the electric field resulting from irregular phase segregation cannot be solved. Further, excessive rare earth oxide results in a problem that the HAL of the laminated ceramic capacitors cannot be improved. Therefore, although the invention in JP2020021819A demonstrates some better efficacy, there is still room for improvement.

The problem to be solved by the invention:
The present invention aims to provide a laminated ceramic capacitor that maintains high capacitance without insulation resistance degradation at high temperatures and high voltages, thereby further improving highly accelerated lifetime (abbreviated as HAL) and achieving excellent reliability.

The technical means to solve the problem:
The present invention provides a laminated ceramic capacitor, comprising:
a capacitor body, comprising:
multiple dielectric layers and multiple internal electrode layers, stacked in an alternating manner, wherein an area where the dielectric layers and the internal electrode layers are stacked in an alternating manner is defined as an effective capacitance part; and
multiple segregated particles, having a size of 10 microns or less and existing in the effective capacitance part; wherein
   the segregated particles are mostly in direct contact with the internal electrode layers,
   the segregated particles have ingredients comprising Si, an alkaline earth metal element, a rare earth element or a combination thereof,
   the segregated particles comprising Si are in a higher concentration than that of the segregated particles comprising the alkaline earth metal element, and
   the segregated particles comprising the alkaline earth metal element are in a higher concentration than the segregated particles comprising the rare earth element; and
two external electrodes, respectively disposed on two opposite sides of the capacitor body and electrically connected to the internal electrode layers.

The laminated ceramic capacitor of the present invention comprises the segregated particles with particular ingredients (especially Si), size and distribution pattern and can maintain high capacitance without insulation resistance degradation resulting from high temperatures and high voltages, thereby improving HAL to achieve excellent reliability.

In one embodiment, the alkaline earth metal element comprises Mg, Ca or a combination thereof.

Preferably, the alkaline earth metal element comprises Mg and Ca, and the segregated particles comprising Mg are in a higher concentration than the segregated particles comprising Ca.

In one embodiment, the rare earth element comprises Dy.

Preferably, the segregated particles consist of the segregated particles with a size of 10 microns or less.

In one embodiment, the segregated particles have a size of 0.1 microns to 10 microns. Preferably, the segregated particles consist of the segregated particles with a size of 0.1 microns to 10 microns. More preferably, the segregated particles in the effective capacitance part consist of the segregated particles with a size of 0.1 microns to 10 microns.

According to the present invention, the upper limit and lower limit of the size of the segregated particles are respectively the longest length of the largest segregated particle and the longest length of the smallest segregated particle, and do not refer to the upper limit and lower limit of the average length of the segregated particles.

In one embodiment, the segregated particles are in a shape including a flat shape, an irregular shape, a spherical shape or a combination thereof. Alternately, the spherical shape indicates a spherical-like shape or an approximately spherical shape.

In one embodiment, the segregated particles comprise a complex oxide and an oxide; wherein the complex oxide comprises at least two elements of Si, Mg, Ca and Dy, and the oxide comprises Si, Mg, Ca, Dy or Mn. According to the present invention, a complex oxide is a chemical compound that contains oxygen and at least two other elements in its chemical formula, and an oxide is a chemical compound that contains oxygen and only one other element in its chemical formula.

Preferably, the oxide comprises silicon dioxide (SiO₂), magnesium oxide (MgO) or a combination thereof.

In one embodiment, the laminated ceramic capacitor has a lamination direction, a length direction and a width direction perpendicular to one another, and based on a total length of all the segregated particles along the length direction, a total length of the segregated particles in direct contact with the internal electrode layers is 90% or more.

According to the present invention, the length of the segregated particles along the length direction refers to the length of the segregated particles along the direction parallel to the internal electrode layers. Preferably, the length of the segregated particles along the length direction refers to the length of the segregated particles along the direction parallel to the extension direction of the internal electrode layers. More preferably, the length of the segregated particles refers to the longest horizontal length of the segregated particles.

According to the examples of the present invention, most of the segregated particles extend along the internal electrode layers and are in a flat shape, while the rest of the segregated particles are in an irregular shape or a spherical shape. As no segregated particle that penetrates several internal electrode layers and extends along the lamination direction is identified, the measurement target is the longest length of the segregated particles along the length direction of the laminated ceramic capacitor, not the area, the diameter or the diagonal of the segregated particles in a cross-section of the laminated ceramic capacitor, and such measurement target is representative and reasonable. In other words, even if the segregated particle is in an irregular shape, the length of the segregated particles is still obtained by measuring the longest horizontal length parallel to the internal electrode layers.

In one embodiment, the internal electrode layers comprise multiple effective electrode portions and multiple discontinuous portions; wherein the effective electrode portions each are electrically connected to one of the external electrodes, the discontinuous portions comprise multiple pores and multiple filled parts, and the pores and the filled parts are respectively surrounded by the dielectric layers and the effective electrode portions. For clarification, a discontinuous portion can be a pore, a filled part or a combination adjacent to each other.

According to the present invention, as the pores and the filled parts are located in the internal electrode layers, the total length of the segregated particles in direct contact with "the internal electrode layers" comprises the total length of the segregated particles in direct contact with "the effective electrode portions" and "the pores or the filled parts." Besides, the term "the segregated particles in direct contact with the pore" indicates the segregated particle in which the outline of the segregated particle partially overlaps the outline of the pore. Finally, if the filled part is a segregated particle, the longest horizontal length of the segregated particle is also included in "the total length of the segregated particles in direct contact with the internal electrode layers."

In one embodiment, the dielectric layer comprises main component particles, and the main component particles comprise barium titanate with a perovskite structure. Further, the perovskite structure has oxides which are solidly dissolved in barium titanate, wherein the oxides comprise magnesium (Mg) oxide, calcium (Ca) oxide, dysprosium (Dy) oxide, manganese (Mn) oxide, zirconium (Zr) oxide or a combination thereof.

In the present invention, oxides which are solidly dissolved in barium titanate also indicate the oxides which fit into and are distributed in the lattice of barium titanate.

The efficacy of the invention:
The present invention provides a laminated ceramic capacitor that maintains high capacitance without insulation resistance degradation at high temperatures and high voltages.

In the drawings:
FIG. 1 is a schematic cross-section view of the laminated ceramic capacitor of the present invention along the lamination direction thereof.
FIG. 2 is an enlarged view of the observation area A in the effective capacitance part in FIG. 1.
FIG. 3 is an SEM photo of representative segregated particles in the Preparation example 1 of the present invention.
FIG. 4 is an EDS analysis photo of representative segregated particles in the Preparation example 1 of the present invention.
FIG. 5 is a schematic diagram demonstrating the measurement of the lengths of the segregated particles of the present invention.
FIG. 6 is an enlarged view of the observation area B in FIG. 2.
FIG. 7 is an SEM photo of representative segregated particles in the Preparation example 2 of the present invention.
FIG. 8 is an EDS analysis photo of representative segregated particles in the Preparation example 2 of the present invention.

The present invention is further explained through the following embodiments. A person having ordinary skill in the art can easily understand the advantages and efficacies achieved by the present invention. The present invention should not be limited to the contents of the embodiments. A person having ordinary skill in the art can make some improvement or modifications which are not departing from the spirit and scope of the present invention to practice or apply the content of the present invention.

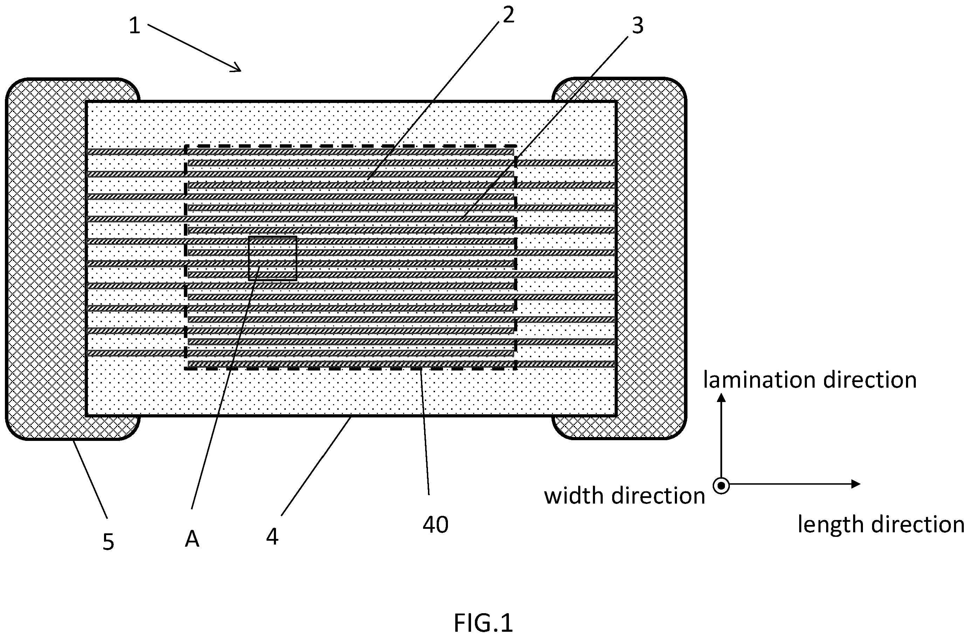

FIG. 1 is a schematic cross-section view of the laminated ceramic capacitor of the present invention along the lamination direction thereof, and FIG. 1 is for schematic illustration only and does not disclose the actual size and the ratios therein. As shown in FIG. 1, the laminated ceramic capacitor 1 comprises a capacitor body 4 and two external electrodes 5. The capacitor body 4 comprises multiple dielectric layers 2 and multiple internal electrode layers 3 stacked in an alternating manner; wherein an area where the dielectric layers 2 and the internal electrode layers 3 are stacked in an alternating manner is defined as an effective capacitance part 40. The two external electrodes 5 are respectively disposed on two opposite sides of the capacitor body 4 and are each electrically connected to the internal electrode layers 3. Further, as shown in FIG. 1, the effective capacitance part 40 comprises the range within the dotted line box. In other words, in the view along the lamination direction, the effective capacitance part 40 is the area where the dielectric layer 2 and the internal electrode layer 3 overlap one on one.

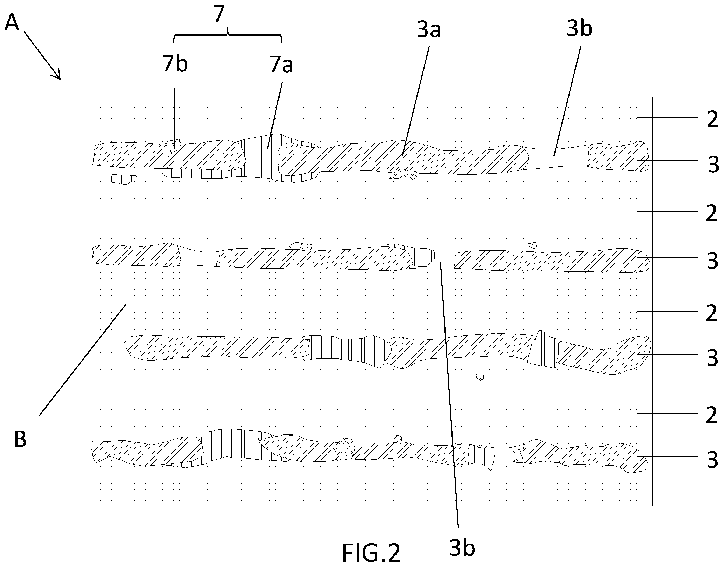

FIG. 2 is an enlarged view of the observation area A in the effective capacitance part 40 in FIG. 1 to clearly illustrate the types and distribution pattern of the segregated particles 7 existing in the effective capacitance part 40 in the present invention. The internal electrode layers 3, the dielectric layers 2 and the segregated particles 7 shown in FIG. 2 are not in actual size and ratios thereof. As shown in FIG. 2, the internal electrode layers 3 comprise the effective electrode portions 3a which are electrically connected to the external electrodes (not shown), and the discontinuous portions 3b. The discontinuous portions 3b are respectively surrounded by the dielectric layers 2 and the effective electrode portions 3a. The segregated particles 7 have a size of 10 microns or less, and mainly comprise complex oxides 7a in a flat shape, an irregular shape or a spherical shape, wherein most of the segregated particles 7 are in a flat shape. Further, the complex oxides 7a are not limited to crystalline phases. The types of the discontinuous portions 3b comprise (1) the discontinuous portions 3b that are fully occupied by the complex oxide 7a, which is marked with 7a, without marking of 3b; (2) the discontinuous portions 3b that are partially occupied by the complex oxide 7a (and the unoccupied parts are pores); and (3) the discontinuous portions 3b that are not occupied by the segregated particles 7 at all and are pores per se. For clarification, the complex oxide 7a in the discontinuous portions 3b is the filled part.

The segregated particles 7 can also comprise oxides 7b in a flat shape, an irregular shape or an approximately spherical shape. Further, the oxides 7b are not limited to crystalline phases. The complex oxides 7a and the oxides 7b exist in the interface between the dielectric layers 2 and the discontinuous portions 3b, or the dielectric layers 2 and the effective electrode portions 3a. The types of the discontinuous portions 3b also comprise the discontinuous portions 3b that are fully or partially occupied by the oxides 7b. In other words, the oxides 7b in the discontinuous portions 3b is the filled part.

The complex oxides 7a comprise Si and Mg as the main ingredients thereof. Also, the complex oxides 7a comprise Si, Mg, Ca and Dy.

The oxides 7b can comprise, for example, SiO₂, MgO, CaO, Dy₂O₃ or MnO, etc. Preferably, the oxides 7b comprise SiO₂ or MgO.

For clarification, according to the distribution pattern of the segregated particles, the segregated particles of the present invention are divided into two groups: (1) those in direct contact with the internal electrode layers, and (2) those without direct contact or in indirect contact with the internal electrode layers, that is, those that are spaced apart from the internal electrode layers.

The present invention uses a Scanning Electron Microscope (SEM) and an Energy-dispersive X-ray spectroscopy (EDS) at a magnification of 3000 to (1) randomly select 20 observation areas to obtain sample photos of SEM and EDS in the effective capacitance part on a cross-section of the laminated ceramic capacitor along the lamination direction, (2) observe the distribution pattern of the segregated particles in the observation areas, and (3) measure the sizes of the segregated particles in the observation areas.

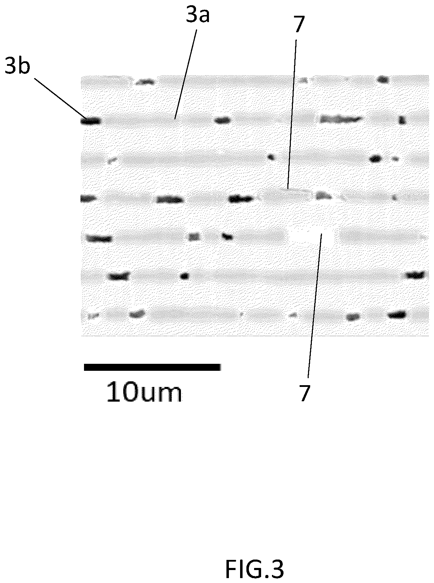

As shown in FIG. 3, the SEM photo at a magnification of 3000 of one of the 20 observation areas clearly demonstrated the effective electrode part 3a and the discontinuous part 3b, especially the pores (the dark gray blocks or the black blocks).

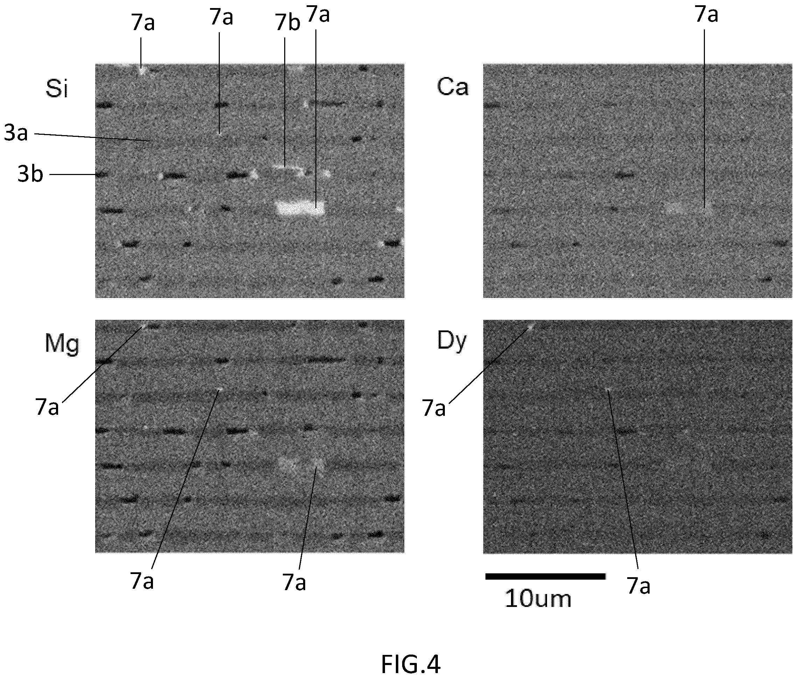

As shown in FIG. 4, the EDS photo at a magnification of 3000 of the observation area the same as that of FIG. 3 further demonstrated element concentrations and distributions of Si, Mg, Ca and Dy. Accordingly, one can find as follows: First, most of the segregated particles were in direct contact with the internal electrode layers (comprising the effective electrode portions 3a and the discontinuous portions 3b). Second, as the distribution of the segregated particles comprising Si, Mg, Ca and Dy was shown in EDS photos, the longest horizontal length of each segregated particle (complex oxides or oxides) can be measured accordingly and that of each segregated particle was 10 microns or less. Third, the segregated particles comprising Si were in a concentration significantly higher than that of the segregated particles comprising Mg, Ca or Dy, and the segregated particles comprising Mg were in the second highest concentration. Fourth, after comparing the distributions of Si, Mg, Ca and Dy, the segregated particles can be further identified as complex oxides 7a (the segregated particle with overlapped signals of at least two of Si, Mg, Ca and Dy) or oxides 7b.

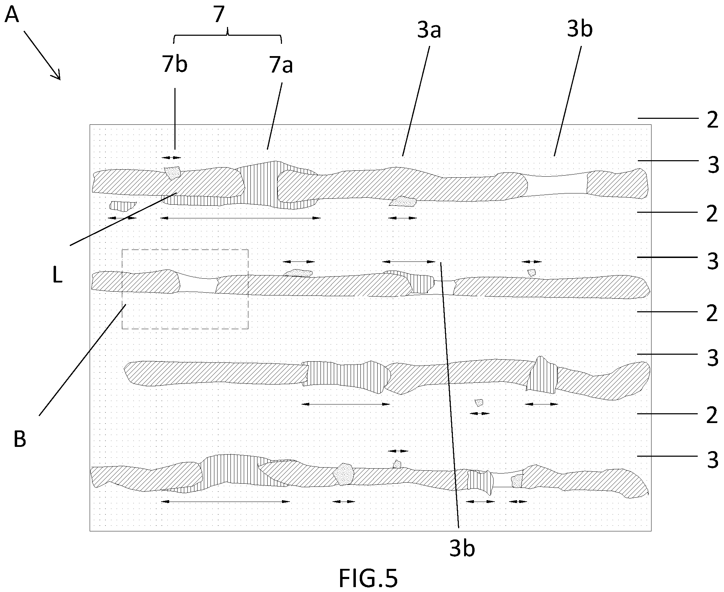

As shown in FIG. 5, through visual observation of the EDS photo, the segregated particles were divided into two groups: (1) those in direct contact with the internal electrode layers 3 comprising the effective electrode portions 3a and the discontinuous portions 3b, and (2) those in indirect contact with the internal electrode layers 3. Then, the longest length L of each segregated particle in the length direction of the laminated ceramic capacitor was measured to respectively obtain the total lengths (the sum of the longest length L of each segregated particle in the length direction of the laminated ceramic capacitor) of the segregated particles (1) in direct contact with the internal electrode layers and (2) in indirect contact with the internal electrode layers, and the sum of said two total lengths serves as the denominator to calculate the respective proportions thereof.

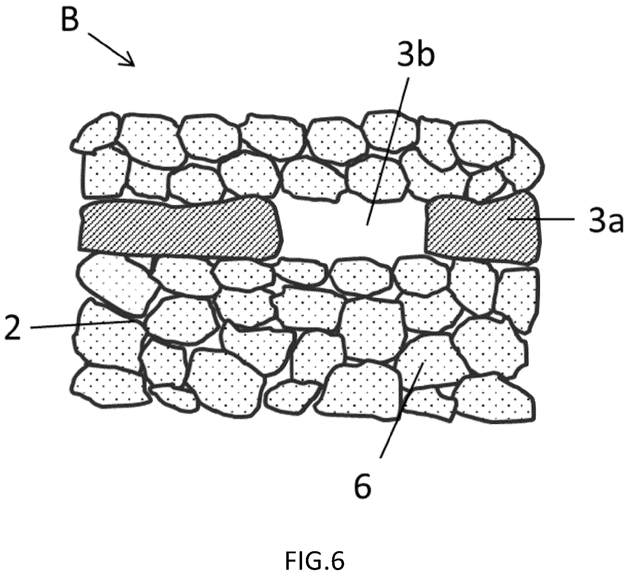

FIG. 6 is an enlarged view of the observation area B in FIG. 5. The dielectric layers 2 are ceramic sintered bodies with main component particles 6. The main component particles 6 are polycrystalline, and comprise barium titanate (BaTiO₃) with a perovskite structure. Further, the perovskite structure has multiple types of oxides which are solidly dissolved in barium titanate to adjust the dielectric constant of BaTiO₃ to secure capacitor characteristics.

Preferably, the oxides comprise magnesium (Mg) oxide, calcium (Ca) oxide, dysprosium (Dy) oxide and manganese (Mn) oxide. Further, the main component particles 6 each have a maximum diameter which does not exceed the thickness of the dielectric layer 2.

For clarification, even the perovskite structure of the main component particles 6 comprise multiple types of oxides, the perovskite structure of BaTiO₃ is not jeopardized. Further, the amount of oxides can be adjusted, and the oxides which are solid dissolved in BaTiO₃ comprise, for example, MgO, CaO, Dy₂O₃, MnO, ZrO₂, etc.

To sum up, the laminated ceramic capacitor of the present invention can maintain a high capacitance and avoid insulation resistance degradation resulting from a high temperature or a high voltage, thereby achieving good reliability.

During the sintering process, the internal electrode layers are formed by sintering the metal powder into a plate shape. Preferably, the metal powder for the internal electrode layers is Ni powder or an alloy powder with Ni as the main material.

For clarification, the internal electrode layers appear to be discontinuous in the cross-section of the laminated ceramic capacitor along the lamination direction; however, the effective electrode portions indeed ensure the electrical connection between the internal electrode layers and the external electrodes according to the other cross-sections.

The external electrodes are (1) electrically connected to the internal electrode layers by sintering metal powder, and (2) connected to the capacitor body by softening glass materials. Preferably, the metal powder for external electrodes is Cu or an alloy powder with Cu as the main material. Further, the glass material of the external electrodes does not diffuse excessively into the capacitor body 4. Further, although not shown in the figures, a Ni plating layer and/or a Sn plating layer can be added after the external electrodes of Cu or the alloy thereof are formed, to improve the installability of the laminated ceramic capacitor.

An example of the manufacturing method of the laminated ceramic capacitor are provided as follows, and the present invention is not limited thereto.

First, the required amount of barium titanate powder and additive powder are weighed, put into the water, mixed by ball milling and dried to obtain a dielectric powder. Barium titanate powder can be produced by solid-phase method, hydrothermal synthesis method, oxalate method, etc. The materials of the additive powder comprise the compound powders that can form oxides of Mg, Ca, Si, Dy and Mn after sintering. Further, the specific surface area of the additive powder is greater than that of barium titanate powder to facilitate the formation of the main component particles and the segregated particles after sintering.

The additive powder can further comprise ZrO₂ to promote the particle growth of the main component particles and the generation of segregated particles, and lower the sintering temperature.

The dielectric powder, a solvent such as ethanol or toluene, a binder such as polyvinyl butyral resin (PVB Resin), and a plasticizer such as phthalate ester are mixed in a ball mill to obtain a dielectric slurry. The mixing time can be determined according to the desirable specific surface area of the dielectric particles (from the dielectric powder) in the dielectric slurry. The dielectric slurry is provided on a polyethylene terephthalate (PET) film to form a thin sheet by a coating machine, and the thickness of the thin sheet can be determined according to the capacitance of the laminated ceramic capacitor.

The thin sheets are printed with a conductive paste for forming the internal electrode layers, and then are laminated and cut to obtain a green body. The conductive paste is made by, for example, mixing Ni powder with a solvent such as terpineol and a binder such as ethyl cellulose or PVB resin. The printing method can be screen printing or gravure printing. Preferably, the Ni powder for the conductive paste has an average particle size of 0.2 microns to 0.4 microns to facilitate maintaining the effective area of the capacitor and increasing the discontinuous portions, thereby promoting the formation of segregated particles.

The green body is further subjected to a degreasing process at a temperature preferably to be 350°C to 500°C in an inert atmosphere to avoid excessive oxidation of the internal electrode layers, and the residual carbon thereof is controlled to be less than 4% based on the total weight of the degreased green body, so that the formation of main component particles and the segregated particles will not be interfered.

The degreased green body is further sintered to obtain a sintered body. The maximum temperature and the hold time during sintering can be determined according to the composition and specific surface area of the dielectric powder. The sintering is performed in an inert atmosphere. Preferably, the oxygen partial pressure of the sintering process is controlled in an atmosphere that is at least 0.1 times lower than the equilibrium oxygen partial pressure of Ni of the internal electrode layers. For example, when the maximum sintering temperature is 1000°C, the oxygen partial pressure of the sintering process is controlled at 10^{-11.4} atm to avoid excessive oxidation of the internal electrode layers.

During the sintering process, the temperature at which Ni powder forms a plate shape is about 1000°C to 1100°C. As the temperature at which the main component particles begin to be sintered is higher than that at which the Ni powder forms a plate shape, the Ni in the internal electrode layers will be over-sintered during the densification of the main component particles, further resulting in the formation of the effective electrode portions and multiple discontinuous portions in the internal electrode layers. Meanwhile, when the main component particles grow and are densified, the additives (the complex oxides or oxides of Mg, Ca, Si and Dy) will be pushed out from the dielectric layers to the interface between the internal electrode layers and the dielectric layers, and phase segregation occurs to form the segregated particles that are complex oxides or oxides.

As a result, most of the segregated particles will be in direct contact with the internal electrode layers, and exist at the interface between the discontinuous portions and the dielectric layers, or between the effective electrode portions and the dielectric layers. Further, the discontinuous portions may be fully or partially occupied by the segregated particles.

However, if there are excessive segregated particles, the segregated particles will be abnormal, for example, the size thereof is too big; and this may result in cracks in the capacitor body after sintering. Therefore, the specific surface area of the dielectric particles (from the dielectric powder) in the dielectric slurry or the sintering temperatures can be appropriately adjusted.

The sintered body is re-oxidized, and then ground by a roll mill to expose the ends of the internal electrode layers at both ends of the sintered body after re-oxidation to obtain the capacitor body. The re-oxidation process is carried out at 900°C to 1050°C in a humidified atmosphere of N₂. The capacitor body is coated with a Cu paste and fired to form the external electrodes, and then a Ni plating layer and a Sn plating layer are sequentially formed to obtain a laminated ceramic capacitor.

The present invention is demonstrated in details as follows, but not limited thereto.

The Preparation example 1

### (1) The Preparation for the laminated ceramic capacitor

First, in order to make the oxides of Mg, Ca, Dy and Mn solidly dissolved in barium titanate with a perovskite structure, the following powders were provided: (1) the main component for the dielectric layers: a BaTiO₃ powder with a specific surface area of 3 m²/g and an average particle size of 0.2 microns to 0.3 microns measured by SEM; and (2) the additives for the dielectric layers: a MgO powder with a specific surface area of 5 m²/g, a CaCO₃ powder with a specific surface area of 10 m²/g, a SiO₂ powder with a specific surface area of 10 m²/g, a Dy₂O₃ powder with a specific surface area of 10 m²/g, and a MnO powder with a specific surface area of 6 m²/g.

Further, the molar ratios of the above powders were as follows: Based on an amount of the BaTiO₃ powder to be 100 moles (mol), that of the MgO powder was 1 mol, that of the CaCO₃ powder was 1 mol, that of the SiO₂ powder was 1 mol, that of the Dy₂O₃ powder was 0.8 mol, and that of the MnO powder was 0.2 mol.

The above powders and pure water were mixed and ground by Zirconia (ZrO₂) balls in a ball mill, and then dried to obtain a dielectric powder.

The dielectric powder, a binder of PVB resin, a plasticizer of phthalate and a dispersant were mixed in a solvent of ethanol and toluene in a ball mill to obtain a dielectric slurry. During the mixing process, the dielectric powder would be crushed by the ZrO₂ balls in the ball mill, so the specific surface area of the dielectric particles (from the dielectric powder) in the dielectric slurry would increase by increasing the mixing time.

This preparation example adjusted different mixing times to obtain 7 types of the dielectric slurries having the dielectric particles (from the dielectric powder) with different specific surface areas ranging from 3.5 m²/g to 8.5 m²/g. The specific surface area of the dielectric particles in the dielectric slurries was measured as follows: A small amount of sample was taken from each dielectric slurry for drying at 150°C, and then subjected to a degreasing process in the air at 350°C to obtain re-dried dielectric particles (from the dielectric slurry), which were further measured by a specific surface area measuring device. For clarification, this preparation example used new ZrO₂ balls, so no ZrO₂ ingredient was released into the dielectric slurry during ball milling.

The 7 types of dielectric slurries were further formed into ceramic thin sheets with a thickness of 4 microns.

Further, a Ni paste (comprising Ni powder with an average particle size of 0.3 microns, ethyl cellulose, terpineol and a dispersant) was printed on the ceramic thin sheets to form the internal electrodes with a thickness of 1 micron to 2 microns and a size of 32 mm×16 mm by a screen printing machine, thereby obtaining the ceramic sheets with the printed internal electrode paste. The ceramic sheets with the printed internal electrode paste in a number of 350 were stacked, thermal pressed for connection by hot isostatic pressing, and cut to obtain green bodies of capacitors with a size of 32 mm×16 mm. The green bodies of capacitors were further adequately degreased at a highest temperature of 400°C in a N₂ atmosphere to obtain degreased green bodies of capacitors.

This preparation example further used 3 maximum temperatures (1220°C, 1250°C and 1280°C) to sinter the degreased green bodies of capacitors using the 7 types of the dielectric slurries.

Concerning the sintering process, the degreased green bodies of capacitors were sintered in a humidified atmosphere of a mixture of N₂ and H₂ to obtain the sintered bodies, wherein the oxygen partial pressure in the humidified atmosphere of N₂ and H₂ was controlled to be lower than the equilibrium oxygen partial pressure of Ni to prevent Ni in the printed internal electrode paste from oxidation.

The sintered body was further re-oxidized at 900°C in an atmosphere of N₂. The sintered body was put in water and the both ends thereof were ground by a roll mill to expose the ends of the internal electrode layers and dried to obtain the capacitor body. The capacitor body was further coated with a Cu paste and fired at 800°C in an atmosphere of N₂ to form the external electrodes, and then a Ni plating layer and a Sn plating layer were sequentially formed to obtain a laminated ceramic capacitor.

### (2) Evaluation

The laminated ceramic capacitors in this preparation example were made by using 7 types of the dielectric slurries and 3 types of sintering temperatures (1220°C, 1250°C and 1280°C) to obtain 21 products [Example 1 (E1) to Example 17 (E17) and Comparative example 1 (CE1) to Comparative example 4 (CE4)], which were further analyzed to obtain the data as follows:
(1) whether there were segregated particles in the effective capacitance part, (2) the upper limit and lower limit of the size of the segregated particles (the longest horizontal length of the largest segregated particle and that of the smallest segregated particle), (3) the ingredients having the top two highest concentration in the segregated particles, (4) the proportion of a total length of the segregated particles in direct contact with the internal electrode layers based on a total length of all the segregated particles along the length direction, wherein the total length of all the segregated particles along the length direction = that of the segregated particles "in direct contact" with the internal electrode layers + that of the segregated particles in indirect contact" with the internal electrode layers, (5) Capacitance, and (6) the failed number in the highly accelerated life test (HALT).

### The segregated particles

The 21 products (E1 to E17 and CE1 to CE4) were ground respectively until the internal cross-sections thereof in the lamination direction were exposed. By using SEM at a magnification of 3000, 20 observation areas in the effective capacitance part were randomly selected and subjected to element analysis by EDS. All the segregated particles in the photos of the 20 observation areas by SEM and EDS can be identified under visual inspection to (1) measure the lengths of the segregated particles, wherein the longest length of the largest segregated particle and the longest length of the smallest segregated particle of each product were recorded and shown in Tables 1 to 3; and (2) observe the distribution pattern of the segregated particles to divide the segregated particles into two groups: A. the segregated particles in direct contact with the internal electrode layers, and B. the segregated particles in indirect contact with the internal electrode layers. The main ingredients (the elements having the top two highest concentrations) in the segregated particles were recorded and shown in Tables 1 to 3. The representative SEM and EDS photos demonstrating segregated particles were shown as FIG. 3 and FIG. 4.

### The capacitance

The capacitance of the 21 products (E1 to E17 and CE1 to CE4) were measured by a digital LCR Meter (purchased from Agilent Technologies, model: 4294A) under the conditions: (1) Temperature: 25°C, (2) Frequency: 1 kHz, and (3) Operating voltage: 1.0 Vrms. 10 samples of each product were measured, the average capacitances thereof were recorded in Tables 1 to 3.

### The highly accelerated life test (HALT)

The insulation resistance of the 21 products (E1 to E17 and CE1 to CE4) was measured with a loading voltage of 150V for 1000 hours at 125°C in a constant temperature bath in the air, wherein 40 samples of each product were measured, and those having an insulation resistance degradation of 1×10⁶ Ω or less in HALT were recorded, and the number of degradation products in the 40 samples were shown in Tables 1 to 3.

### (3) Results

Tables 1 to 3 demonstrate the aforementioned results of the 21 products (E1 to E17 and CE1 to CE4), which were obtained by using 7 types of the dielectric slurries and sintered at 1220°C, 1250°C and 1280°C.

According to Table 1, first, the products 1, 2 and 8 were CE1 to CE3 as they had no segregated particles, and demonstrated insulation resistance degradation. Further, the product 21 was CE4 as it had a segregated particle with a length (the longest length along the length direction of the laminated ceramic capacitor) of more than 10 microns, and demonstrated insulation resistance degradation. As a slight crack near the above largest segregated particle was found, one can find that the segregated particles with a size of more than 10 microns can easily cause cracks and further result in insulation resistance degradation. Therefore, the segregated particles of 10 microns or less can effectively prevent insulation resistance degradation.

Second, according to the products 1 to 7, it can be found that increasing the specific surface area of the dielectric particles (from the dielectric powder) in the dielectric slurry can promote the formation of the segregated particles and increase the size of the segregated particles. According to the products 2, 9 and 16 in Tables 1 to 3, it can be found that increasing the sintering temperature can also promote the formation of segregated particles and increase the size of segregated particles. According to the products 1 to 7 in Table 1, forming the segregated particles and increasing the size thereof can increase the capacitance value and reduce the number of the laminated ceramic capacitor showing insulation resistance degradation in HALT.

Therefore, in order to maintain a high capacitance and avoid insulation resistance degradation, the size (length) of the segregated particles shall be controlled to 10 microns or less. In this preparation example, preferably, the size of the segregated particles is 0.1 microns to 10 microns. Further, the size of the segregated particles can be appropriately adjusted according to the specific surface area of the dielectric particles (from the dielectric powder) in the dielectric slurry or the sintering temperatures. For example, if the specific surface area of the dielectric particles (from the dielectric powder) in the dielectric slurry is 8.5 m²/g, the sintering temperature can be set to 1220°C to 1250°C. For the sintering temperature of 1280°C, the specific surface area of the dielectric particles (from the dielectric powder) in the dielectric slurry can be set to 3.5 m²/g to 8.0 m²/g.

Further, when the specific surface area of the dielectric particles (from the dielectric powder) in the dielectric slurry is reduced and the sintering temperature is too low, it will be difficult to form the segregated particles due to insufficient sintering of the main component particles, and insulation resistance degradation may easily occur.

Further, according to Tables 1 to 3, based on a total length of all the segregated particles along the length direction, a total length of the segregated particles in direct contact with the internal electrode layers is 90% or more. According to FIG. 4, the segregated particles in contact with the effective electrode portions exist at the interface between the discontinuous portions and the dielectric layers, or the effective electrode portions and the dielectric layers. Further, the segregated particles are in a shape including a flat shape, an irregular shape and a spherical shape.

According to FIG. 4, different elements can be detected in the same segregated particle, and such segregated particles are complex oxides. Therefore, it proves that: (1) the segregated particles had complex oxides, and (2) the discontinuous portions could be fully occupied by the segregated particles.

According to FIG. 4, the segregated particles comprising Si and Mg were in a concentration higher than that of the segregated particles comprising Ca and Dy. Therefore, it proves that Si and Mg were the main ingredients of the complex oxides. Further, although Ca and Dy were in a relatively low concentration, Si, Mg, Ca and Dy can be all detected in the same single segregated particle, which proves that the present invention has complex oxides of Si, Mg, Ca and Dy.

To sum up, the present invention controls the size of the segregated particles to be 10 microns or less, and the segregated particles comprise complex oxides with Si and Mg as the main ingredients. Further, the present invention has the important features as follows: (1) the present invention has the discontinuous portions that are fully occupied by the segregated particles, (2) a total length of the segregated particles in direct contact with the internal electrode layers is 90% or more based on a total length of all the segregated particles along the length direction (that is, the total length of segregated particles spaced apart from the internal electrode layers is less than 10%), and (3) the segregated particles in contact with the effective electrode portions exist at the interface between the discontinuous portions and the dielectric layers, or the effective electrode portions and the dielectric layers. Therefore, the laminated ceramic capacitor of the present invention can maintain a high capacitance and increase HAL.

Further, in addition to complex oxides, the segregated particles also comprise a small amount of oxides such as SiO₂, MgO, CaO and Dy₂O₃. Further, based on the total amount of the additives, MnO was in a small proportion and was not detected in the segregated particles.

The Preparation example 2

### (1) The Preparation for the laminated ceramic capacitor

This preparation example further used different amounts of ZrO₂ powder with a specific surface area of 10 m²/g in addition to the raw materials in Preparation example 1, wherein based on an amount of the BaTiO₃ powder to be 100 moles (mol), those of the ZrO₂ powders were 0.01 mol, 0.05 mol, 0.10 mol, 0.30 mol and 0.50 mol. This preparation example followed the mixing and drying steps the same as those in Preparation example 1 to obtain 5 types of the dielectric powders (and the only difference thereof is ZrO₂ concentration).

This preparation example further followed the steps the same as those in Preparation example 1 to obtain 5 types of dielectric slurries (and the only difference thereof is ZrO₂ concentration), wherein all the dielectric particles (from the dielectric powder) in the dielectric slurry have the specific surface area of 5.0 m²/g. This preparation example further followed the steps similar to those in Preparation example 1 with the differences that the sintering temperatures were respectively 1190°C, 1220°C and 1250°C to obtain 15 types of laminated ceramic capacitors (Products 22 to 36).

### (2) Evaluation

The 15 types of laminated ceramic capacitors [Products 22 to 36, or Example 18 (E18) to Example 31 (E31) and Comparative example 5 (CE5)] were obtained by using 5 types of the dielectric powders with difference ZrO₂ concentration) and 3 sintering temperatures. All test items and the methods thereof were the same as those in Preparation example 1.

### (3) Results

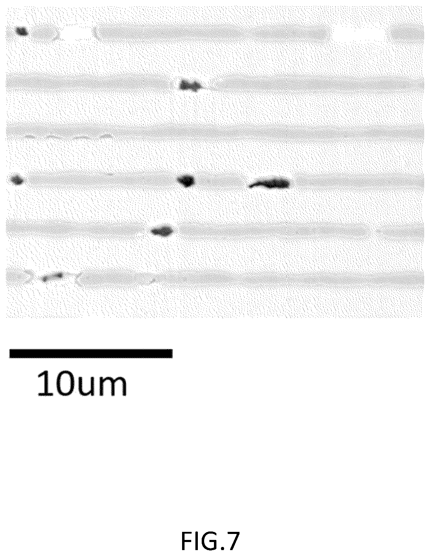

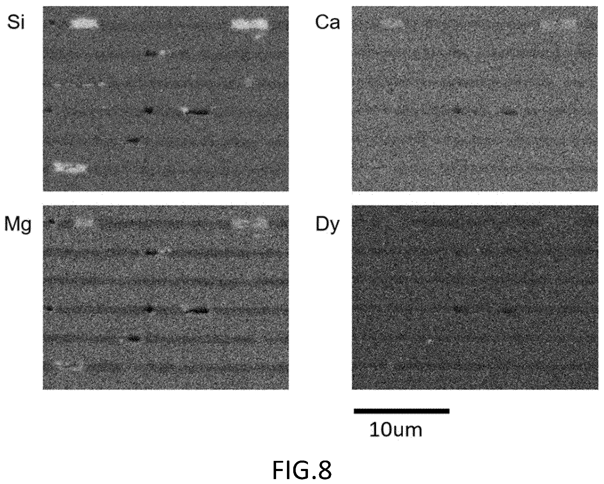

The test results of products 22 to 36 (E18 to E31 and CE5) were divided into three groups according to the sintering temperatures of 1190°C, 1220°C and 1250°C, and were listed in Tables 4 to 6, respectively. The representative SEM and EDS photos demonstrating segregated particles were shown in FIG. 7 and FIG. 8.

According to Table 4, the product 22 used ZrO₂ with the addition ratio of 0.01 mol and the sintering temperature of 1190°C. As the product 22 did not form segregated particles due to insufficient sintering, product 22 was Comparative example 5. In comparison, the products 23 to 26 can form segregated particles, so adding ZrO₂ brought the efficacy to lower the required sintering temperature to promote the formation of segregated particles. Therefore, in order to maintain high capacitance and avoid insulation resistance degradation at the same time, ZrO₂ can be added according to the sintering temperature required by the process. For example, when the maximum sintering temperature is 1190°C, the addition ratio of ZrO₂ can be 0.05 mol to 0.50 mol.

Accordingly, ZrO₂ can promote both the sintering of main component particles and the formation of segregated particles at low temperatures to prevent the laminated ceramic capacitor from showing insulation resistance degradation in HALT.

According to Tables 4 to 6, the capacitance values gradually increase with the formation of segregated particles and the increase of the size of segregated particles.

According to Table 4, the product 22 (CE5) did not form segregated particles and had insulation resistance degradation. Further, the size of segregated particles increased as the addition ratio of ZrO₂ increased. Therefore, ZrO₂ can be appropriately added according to the required capacitance under the condition that the size of segregated particles is controlled within 10 microns. In this preparation example, preferably, the size of segregated particles is 0.1 microns to 10 microns.

According to Tables 4 to 6, based on a total length of all the segregated particles along the length direction, a total length of the segregated particles in direct contact with the internal electrode layers is 90% or more.

According to FIG. 7 and FIG. 8, the segregated particles existed (1) at the interface between the discontinuous portions and the dielectric layers, or the effective electrode portions and the dielectric layers, and (2) in the discontinuous portions. The segregated particles were in a shape comprising a flat shape, an irregular shape and a spherical shape.

According to FIG. 8, different elements can be detected in the same segregated particle, and such segregated particles were complex oxides. Therefore, it has proved that: (1) the segregated particles had complex oxides, and (2) the discontinuous portions could be fully occupied by the segregated particles.

Further, the segregated particles comprising Si and Mg were in a concentration higher than that of the segregated particles comprising Ca and Dy. Therefore, Si and Mg are proved to be the main ingredients of the complex oxides. Further, although Ca and Dy were in a relatively low concentration, Si, Mg, Ca and Dy can be all detected on the same single segregated particle, which proves that the present invention has complex oxides of Si, Mg, Ca and Dy.

To sum up, the present invention controls the size of the segregated particles to be 10 microns or less, and the segregated particles comprise complex oxides with Si and Mg as the main ingredients. Further, the present invention has the important features as follows: (1) the present invention has the discontinuous portions that are fully occupied by the segregated particles, (2) a total length of the segregated particles in direct contact with the internal electrode layers is 90% or more based on a total length of all the segregated particles along the length direction (that is, the total length of segregated particles spaced apart from the internal electrode layers is less than 10%), and (3) the segregated particles in contact with the effective electrode portions exist at the interface between the discontinuous portions and the dielectric layers, or the effective electrode portions and the dielectric layers. Therefore, the laminated ceramic capacitor of the present invention can maintain a high capacitance and increase HAL.

Further, in addition to complex oxides, the segregated particles also comprise a small amount of oxides such as SiO₂, MgO, CaO and Dy₂O₃. Further, based on the total amount of the additives, MnO and ZrO₂ were in a small proportion and were not detected in the segregated particles.

For clarification, Zirconia (ZrO₂) balls were used to prepare the dielectric slurry in this preparation example. If old ZrO₂ balls were used, which may release ZrO₂ into the dielectric slurry, the addition ratio of ZrO₂ powder may be adjusted, or even not to add ZrO₂ powder.

Table 1: The sintering temperature, the specific surface areas of the dielectric particles in the dielectric slurries (abbreviated as "specific surface areas"), the upper limit and lower limit of the length of the segregated particles (abbreviated as "length"), the elements with the highest (abbreviated as "No. 1 element") and the second highest (abbreviated as "No. 2 element") concentrations in the segregated particles, the ratio of the total length of all segregated particles in direct contact with the internal electrode layers (abbreviated as "ratio of direct contact length"), capacitance values, and degradation number of Products 1 to 7 (CE1, CE2, and E1 to E5).

**Table 1**

| Products | | Dielectric particle | Sintering temperature: 1220°C | | | | | |
|---|---|---|---|---|---|---|---|---|
| | | Specific surface areas (m²/g) | Segregated particles | | | | Capacitance (µF) | Number of degradation product |
| | | | Length (µm) | No. 1 element | No. 2 element | Ratio of direct contact length (%) | | |
| 1 | CE1 | 3.5 | No segregated particles | Si | Mg | N/A | 9.5 | 3/40 |
| 2 | CE2 | 4.0 | No segregated particles | Si | Mg | N/A | 10.0 | 1/40 |
| 3 | E1 | 4.7 | 0.1-2.2 | Si | Mg | 92 | 10.2 | 0/40 |
| 4 | E2 | 6.0 | 1.8-3.5 | Si | Mg | 94 | 10.3 | 0/40 |
| 5 | E3 | 7.3 | 3.8-4.2 | Si | Mg | 94 | 10.4 | 0/40 |
| 6 | E4 | 8.0 | 3.9-5.7 | Si | Mg | 97 | 10.6 | 0/40 |
| 7 | E5 | 8.5 | 4.2-5.9 | Si | Mg | 97 | 10.9 | 0/40 |

Table 2: The sintering temperature, the specific surface areas of the dielectric particles in the dielectric slurries (abbreviated as "specific surface areas"), the upper limit and lower limit of the length of the segregated particles (abbreviated as "length"), the elements with the highest (abbreviated as "No. 1 element") and the second highest (abbreviated as "No. 2 element") concentrations in the segregated particles, the ratio of the total length of all segregated particles in direct contact with the internal electrode layers (abbreviated as "ratio of direct contact length"), capacitance values, and degradation number of Products 8 to14 (CE3, and E6 to E11).

**Table 2**

| Products | | Dielectric particle | Sintering temperature: 1250°C | | | | | |
|---|---|---|---|---|---|---|---|---|
| | | Specific surface areas (m²/g) | Segregated particles | | | | Capacitance (µF) | Number of degradation product |
| | | | Length (µm) | No. 1 element | No. 2 element | Ratio of direct contact length (%) | | |
| 8 | CE3 | 3.5 | No segregated particles | Si | Mg | N/A | 10.0 | 3/40 |
| 9 | E6 | 4.0 | 0.6-1.1 | Si | Mg | 93 | 10.4 | 0/40 |
| 10 | E7 | 4.7 | 0.9-2.5 | Si | Mg | 93 | 10.4 | 0/40 |
| 11 | E8 | 6.0 | 1.8-3.8 | Si | Mg | 95 | 10.7 | 0/40 |
| 12 | E9 | 7.3 | 4.0-5.5 | Si | Mg | 96 | 10.6 | 0/40 |
| 13 | E10 | 8.0 | 5.1-6.0 | Si | Mg | 97 | 10.8 | 0/40 |
| 14 | E11 | 8.5 | 5.9-8.8 | Si | Mg | 98 | 11.1 | 0/40 |

Table 3: The sintering temperature, the specific surface areas of the dielectric particles in the dielectric slurries (abbreviated as "specific surface areas"), the upper limit and lower limit of the length of the segregated particles (abbreviated as "length"), the elements with the highest (abbreviated as "No. 1 element") and the second highest (abbreviated as "No. 2 element") concentrations in the segregated particles, the ratio of the total length of all segregated particles in direct contact with the internal electrode layers (abbreviated as "ratio of direct contact length"), capacitance values, and degradation number of Products 15 to 21 (E12 to E17 and CE4).

**Table 3**

| Products | | Dielectric particle | Sintering temperature: 1280°C | | | | | |
|---|---|---|---|---|---|---|---|---|
| | | Specific surface areas (m²/g) | Segregated particles | | | | Capacitance (µF) | Number of degradation product |
| | | | Length (µm) | No. 1 element | No. 2 element | Ratio of direct contact length (%) | | |
| 15 | E12 | 3.5 | 0.5-1.0 | Si | Mg | 92 | 10.3 | 0/40 |
| 16 | E13 | 4.0 | 0.8-1.7 | Si | Mg | 93 | 10.6 | 0/40 |
| 17 | E14 | 4.7 | 1.2-2.5 | Si | Mg | 93 | 10.7 | 0/40 |
| 18 | E15 | 6.0 | 2.0-4.0 | Si | Mg | 96 | 10.8 | 0/40 |
| 19 | E16 | 7.3 | 4.7-6.2 | Si | Mg | 96 | 10.9 | 0/40 |
| 20 | E17 | 8.0 | 7.0-9.2 | Si | Mg | 97 | 10.9 | 0/40 |
| 21 | CE4 | 8.5 | 7.1-11.5 | Si | Mg | 97 | 11.6 | 4/40 |

Table 4: The sintering temperature, the addition ratios of ZrO₂ (abbreviated as "ZrO₂ ratios"), the upper limit and lower limit of the length of the segregated particles (abbreviated as "length"), the elements with the highest (abbreviated as "No. 1 element") and the second highest (abbreviated as "No. 2 element") concentrations in the segregated particles, the ratio of the total length of all segregated particles in direct contact with the internal electrode layers (abbreviated as "ratio of direct contact length"), capacitance values, and degradation number of Products 22 to 26 (CE5 and E18 to 21).

**Table 4**

| Products | | Dielectric powder | Sintering temperature: 1190°C | | | | | |
|---|---|---|---|---|---|---|---|---|
| | | ZrO₂ ratios (mol) | Segregated particles | | | | Capacitance (µF) | Number of degradation product |
| | | | Length (µm) | No. 1 element | No. 2 element | Ratio of direct contact length (%) | | |
| 22 | CE5 | 0.01 | No segregated particles | Si | Mg | N/A | 9.3 | 4/40 |
| 23 | E18 | 0.05 | 0.1-0.5 | Si | Mg | 93 | 9.9 | 0/40 |
| 24 | E19 | 0.10 | 0.1-1.0 | Si | Mg | 95 | 10.3 | 0/40 |
| 25 | E20 | 0.30 | 0.5-2.1 | Si | Mg | 95 | 10.4 | 0/40 |
| 26 | E21 | 0.50 | 0.9-2.5 | Si | Mg | 97 | 10.6 | 0/40 |

Table 5: The sintering temperature, the addition ratios of ZrO₂ (abbreviated as "ZrO₂ ratios"), the upper limit and lower limit of the length of the segregated particles (abbreviated as "length"), the elements with the highest (abbreviated as "No. 1 element") and the second highest (abbreviated as "No. 2 element") concentrations in the segregated particles, the ratio of the total length of all segregated particles in direct contact with the internal electrode layers (abbreviated as "ratio of direct contact length"), capacitance values, and degradation number of Products 27 to 31(E22 to E26).

**Table 5**

| Products | | Dielectric powder | Sintering temperature: 1220°C | | | | | |
|---|---|---|---|---|---|---|---|---|
| | | ZrO₂ ratios (mol) | Segregated particles | | | | Capacitance (µF) | Number of degradation product |
| | | | Length (µm) | No. 1 element | No. 2 element | Ratio of direct contact length (%) | | |
| 27 | E22 | 0.01 | 0.4-0.8 | Si | Mg | 93 | 10.4 | 0/40 |
| 28 | E23 | 0.05 | 0.8-1.9 | Si | Mg | 95 | 10.4 | 0/40 |
| 29 | E24 | 0.10 | 1.2-2.6 | Si | Mg | 96 | 10.7 | 0/40 |
| 30 | E25 | 0.30 | 2.4-4.2 | Si | Mg | 96 | 10.8 | 0/40 |
| 31 | E26 | 0.50 | 2.9-4.8 | Si | Mg | 97 | 10.9 | 0/40 |

Table 6: The sintering temperature, the addition ratios of ZrO₂ (abbreviated as "ZrO₂ ratios"), the upper limit and lower limit of the length of the segregated particles (abbreviated as "length"), the elements with the highest (abbreviated as "No. 1 element") and the second highest (abbreviated as "No. 2 element") concentrations in the segregated particles, the ratio of the total length of all segregated particles in direct contact with the internal electrode layers (abbreviated as "ratio of direct contact length"), capacitance values, and degradation number of Products 32 to 36(E27 to E31).

**Table 6**

| Products | | Dielectric powder | Sintering temperature: 1250°C | | | | | |
|---|---|---|---|---|---|---|---|---|
| | | ZrO₂ ratios (mol) | Segregated particles | | | | Capacitance (µF) | Number of degradation product |
| | | | Length (µm) | No. 1 element | No. 2 element | Ratio of direct contact length (%) | | |
| 32 | E27 | 0.01 | 0.9-1.8 | Si | Mg | 94 | 10.4 | 0/40 |
| 33 | E28 | 0.05 | 1.2-2.0 | Si | Mg | 96 | 10.7 | 0/40 |
| 34 | E29 | 0.10 | 1.5-2.8 | Si | Mg | 97 | 10.9 | 0/40 |
| 35 | E30 | 0.30 | 2.7-4.8 | Si | Mg | 97 | 10.9 | 0/40 |
| 36 | E31 | 0.50 | 3.9-5.4 | Si | Mg | 97 | 11.1 | 0/40 |

## Claims

1. A laminated ceramic capacitor (1), **characterized by** comprising:
a capacitor body (4), comprising:
multiple dielectric layers (2) and multiple internal electrode layers (3), stacked in an alternating manner, wherein an area where the dielectric layers (2) and the internal electrode layers (3) are stacked in an alternating manner is defined as an effective capacitance part (40); and
multiple segregated particles (7), having a size of 10 microns or less and existing in the effective capacitance part (40); wherein
the segregated particles (7) are mostly in direct contact with the internal electrode layers (3),
the segregated particles (7) have ingredients comprising Si, an alkaline earth metal element, a rare earth element or a combination thereof,
the segregated particles (7) comprising Si are in a higher concentration than the segregated particles (7) comprising the alkaline earth metal element, and
the segregated particles (7) comprising the alkaline earth metal element are in a higher concentration than the segregated particles (7) comprising the rare earth element; and
two external electrodes (5), respectively disposed on two opposite sides of the capacitor body (4) and each electrically connected to the internal electrode layers (3).

2. The laminated ceramic capacitor (1) as claimed in Claim 1, wherein the alkaline earth metal element comprises Mg, Ca or a combination thereof.

3. The laminated ceramic capacitor (1) as claimed in Claim 2, wherein the alkaline earth metal element comprises Mg and Ca, and the segregated particles (7) comprising Mg are in a higher concentration than the segregated particles (7) comprising Ca.

4. The laminated ceramic capacitor (1) as claimed in any one of Claims 1 to 3, wherein the rare earth element comprises Dy.

5. The laminated ceramic capacitor (1) as claimed in any one of Claims 1 to 4, wherein the segregated particles (7) have a size ranging from 0.1 microns to 10 microns.

6. The laminated ceramic capacitor (1) as claimed in any one of Claims 1 to 5, wherein the segregated particles (7) are in a shape including a flat shape, an irregular shape, a spherical shape or a combination thereof.

7. The laminated ceramic capacitor (1) as claimed in any one of Claims 1 to 6, wherein the segregated particles (7) comprise a complex oxide (7a) and an oxide (7b), the complex oxide (7a) comprises at least two elements of Si, Mg, Ca and Dy, and the oxide (7b) comprises Si, Mg, Ca, Dy or Mn.

8. The laminated ceramic capacitor (1) as claimed in any one of Claims 1 to 7, wherein the laminated ceramic capacitor (1) has a lamination direction, a length direction and a width direction perpendicular to one another, and based on a total length of all the segregated particles (7) along the length direction, a total length of the segregated particles (7) in direct contact with the internal electrode layers (3) is 90% or more.
